# EUROPEAN PATENT APPLICATION

(11) **EP 4 364 932 A1**
(43) Date of publication of application: **08.05.2024**
(21) Application number: 22205307.6
(22) Date of filing: 03.11.2022
(51) Int. Cl.: B29C 70/52, B29B 15/12

(54) **A SYSTEM FOR IMPREGNATING FIBERS FOR PRODUCING POLYURETHANE PULTRUDED COMPOSITES, A METHOD FOR USING THE SAME AND POLYURETHANE PULTRUDED COMPOSITE**

(71) Applicant: Covestro Deutschland AG, 51373 Leverkusen (DE)
(72) Inventor: Gu, Yongming, 201208 Pudong New District, Shanghai (CN); Wu, Frank, 201206 Shanghai (CN); Li, Zhijiang, 201318 Pudong District, Shanghai (CN)
(74) Representative: Levpat

(57) **Abstract**

The invention relates to a system for impregnating fibers for a polyurethane pultrusion process, the system for impregnating fibers comprising an injection box (101), the injection box (101) having a cavity for the fiber material to pass through, and the cavity having an inlet (102) and an outlet (103), wherein the lower wall section (107) of the inner wall of the cavity includes one or more slopes, the lower edge of the inlet of the cavity is not lower than the lower edge of the outlet (103) of the cavity, and the slope closest to the inlet makes the inlet (102) of the cavity sloping down towards the outlet (103).

## Description

### Technical field

The present invention relates to a system for impregnating fibers for producing pultruded composites. In particular, the present invention relates to a system for impregnating fibers for producing polyurethane pultruded composites. In addition, the present invention also relates to a method for using the system and the polyurethane pultruded composites produced by the system.

### Prior art

Traditional pultrusion processes mainly adopt the open dipping method, in which fibers, fabrics or felts pass through a dipping tank with pressing rollers or pressing rods, and the fibers with resin are extruded step by step through preforming plates and then enter the heated mold for curing. There are a series of problems with the traditional open dipping method, such as, high VOC volatilization, relative high resin waste rate and high porosity content of finished products, and resin systems with relatively short gel time being not suitable for this process. Downtime and change of product specifications are relative time-consuming and relative costly.

In order to solve the above problems, two types of closed injection processes have been developed. The one type is the low-pressure injection method. This type of injection box usually has one or more tapers inside, which is/are symmetrical along the central axis of the pultrusion direction, that is, the taper is uniform above/below the central axis, wherein the pultrusion direction is parallel to the horizontal plane. The injection orifices thereof are generally located at the top and bottom of the injection box. The resin is injected into the injection box by the injection machine and then infiltrates the unidirectional fiber yarns. This type of injection box is suitable for whole yarn pultrusion. The other type is the high-pressure injection method. The injection orifices thereof are generally located at the top and bottom of the injection box. This kind of injection box infiltrates the porous structure layers such as tape felts or fabrics at a certain injection pressure. However, in the above-mentioned low-pressure injection and impregnation device, the resin often overflows from the inlet of the injection box, through which the fiber yarns are fed, and thus is wasted. If it is controlled so that the resin does not overflow from the inlet of the injection box, the internal fiber infiltration is prone to be poor inside the injection box due to insufficient resin amount.

CN106515047A discloses a reaction injection pultrusion equipment including a forming unit for forming resins and fibers, the forming unit including at least four machining sections connected in sequence: a preheating section, a dipping section, a heating section and a cooling section.

### Summary of the invention

In one aspect, the present invention relates to a system for impregnating fibers for a polyurethane pultrusion process, the system for impregnating fibers comprising an injection box, the injection box having a cavity for the fiber material to pass through, and the cavity having an inlet and an outlet, wherein the lower wall section of the inner wall of the cavity includes one or more slopes, the lower edge of the inlet of the cavity is not lower than the lower edge of the outlet of the cavity, and the slope closest to the inlet makes the inlet of the cavity sloping down towards the outlet. The fiber material passes through the cavity via the inlet and the outlet thereof.

In an embodiment, the lower wall section of the inner wall of the cavity has a slope, wherein the corresponding lower wall section and the central axis of the injection box have an included angle α, and the included angle α is in a range of 0-5° .

In an embodiment, the sectional area of the cavity decreases in the direction from the inlet to the outlet. In a preferred embodiment, the sectional area (T1) of the inlet to the sectional area (T2) of the outlet of the cavity has a ratio (T1/T2) of 2:1-10:1 .

In another embodiment, the system of the present invention further comprises a mold, the outlet of the cavity being connected to the mold. In a specific embodiment, a transition section is optionally provided between the outlet and the mold, the cavity and the mold being connected by the transition section. Preferably, the sectional area of the transition section decreases in the direction from the inlet to the outlet.

In another aspect, the present invention also relates to a pultrusion method for producing polyurethane composites, said method using the system of the present invention, and comprising the steps of: providing the polyurethane material, passing the fiber material through the cavity of the injection box, injecting the polyurethane material into the cavity, thereby impregnating the fiber material, curing the impregnated fiber material, thereby obtaining the polyurethane composites.

In yet another aspect, the present invention also relates to a polyurethane composite produced by the method of the present invention.

### Description of drawings

Fig. 1: a) schematic view of the sectional structure, b) and c) schematic view of longitudinal sectional structure of one embodiment of the system for impregnating fibers of the present invention.
Fig. 2: schematic view of longitudinal sectional structure of one embodiment of the system for impregnating fibers of the present invention.
Fig. 3: schematic view of the method for producing polyurethane pultruded composites.
Fig. 4: schematic view of longitudinal sectional structure of a conventional injection box, wherein the inner cavity has a symmetrical taper with respect to the central axis of the pultrusion direction.

101 injection box, 102 inlet, 103 outlet, 104 transition section, 105 mold, 106 upper wall of the cavity, 107 lower wall of the cavity, 108 injection orifice.

1 fiber material, 2 yarn guide plate, 3 injection device and polyurethane resin, 4 injection box, 5 mold, 6 drawing device, 7 cutting device.

### Embodiments

### General definitions and terminology

All publications, patent applications, patents, and other references mentioned herein are incorporated by reference in their entirety, unless otherwise indicated.

Unless otherwise defined, all technical and scientific terms used herein have the same meaning as commonly understood by one of ordinary skill in the art to which this invention belongs. In case of conflict, the definitions provided herein shall prevail.

All percentages, parts, portions, etc. are by weight, unless otherwise indicated. Those skilled in the art will understand that the sum of all components in the composition may suitably be 100%. When an amount, concentration, or other value or parameter is given as a range, preferred range, or preferred upper and lower limits, or a specific value, it should be understood as specifically disclosing all ranges formed by pairs of numerical values of any upper limit or preferred value and any lower limit or preferred value, whether or not the ranges are individually disclosed. Unless otherwise indicated, the stated range is meant to include its endpoints, as well as all integers and fractions within that range, when a numerical range is recited herein.

When used in conjunction with a numerical variable, the terms "about", "approximately" generally mean that the numerical value of the variable and all numerical values of the variable are within experimental error (for example, within a 95% confidence interval for the mean) or a range of ±10% of the specified numerical value, or a wider range.

As used herein, the terms "optional" or "optionally" mean that the subsequently described event or circumstance may or may not occur, and that the description includes both the occurrence and the non-occurrence of the event or circumstance, and includes further that the content described later is arbitrarily selected. For example, it means that a component can be optionally present, when the content of a certain ingredient is 0%-5% herein, that is, it covers the absence (0%) and the presence (>0-5%).

The terms "comprising", "including", "having", "containing" or "involving" and other variations thereof herein are inclusive or open-ended and do not exclude other unmentioned elements or method steps. It should be understood by those skilled in the art that the above-mentioned terms such as "comprising" encompass the meaning of "consisting of'. The expression "consisting of' excludes any element, step or ingredient not specified. The expression "consisting essentially of' means that the scope is limited to the specified elements, steps or components, plus optional elements, steps or components that do not materially affect the basic and novel characteristics of the claimed subject matter. It should be understood that the expression "comprising" encompasses the expressions "consisting essentially of' and "consisting of'. The term "selected from" refers to one or more elements of the following listed groups, selected independently, and may include combinations of two or more elements therein.

As used herein, the term "one or more" or "at least one" refers to one, two, three, four, five, six, seven, eight, nine or more.

The term "and/or" as used herein encompasses "and" as well as "or". Plural elements, components or steps defined with "and/or" mean any one and any combination of said elements, components or steps. For example, A and/or B encompass A, B, and A+B; A, B, and/or C encompass A, B, C, A+B, A+C, B+C, and A+B+C.

Unless otherwise specified, the terms "combination thereof', "any combination thereof' and "mixtures thereof' mean mixtures of more component from the elements in question, such as mixtures of two, three, four components and up to the possible maximum.

In addition, if the number of parts or components of the present invention is not indicated before, it means that there is no limit to the number of the parts or components appearing (or present). Accordingly, it should be understood to include one or at least one, and the singular form of a part or component includes further the plural, unless the numerical value is clearly meant to be singular.

As used herein, "more" means two or more than two, unless expressly and specifically limited otherwise. Unless the context clearly dictates otherwise, "a" can encompass a singular reference, as well as a plural reference.

### System for impregnating fibers

In one aspect, the present invention relates to a system for impregnating fibers. The system can be used in the polyurethane pultrusion process. The system for impregnating fibers comprises an injection box. The injection box is provided with a cavity for the fiber material to pass through. The cavity has an inlet and an outlet. The fiber material passes through the cavity via the inlet and the outlet thereof. Herein, the inlet and the outlet of the cavity may also be referred to as the inlet of the injection box and the outlet of the injection box, respectively.

The lower wall section of the inner wall of the cavity may have one or more slopes. The slope may also be referred to as the inclination. In this context, it refers to the inclination degree of a certain part of the lower wall section of the inner wall of the cavity with respect to the horizontal plane.

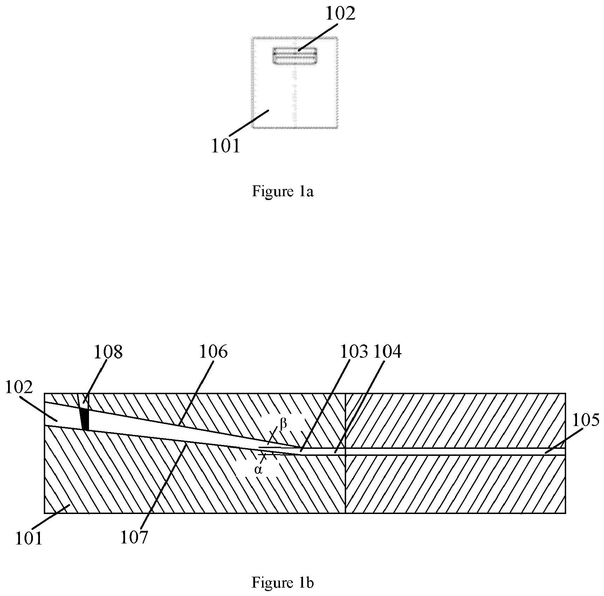

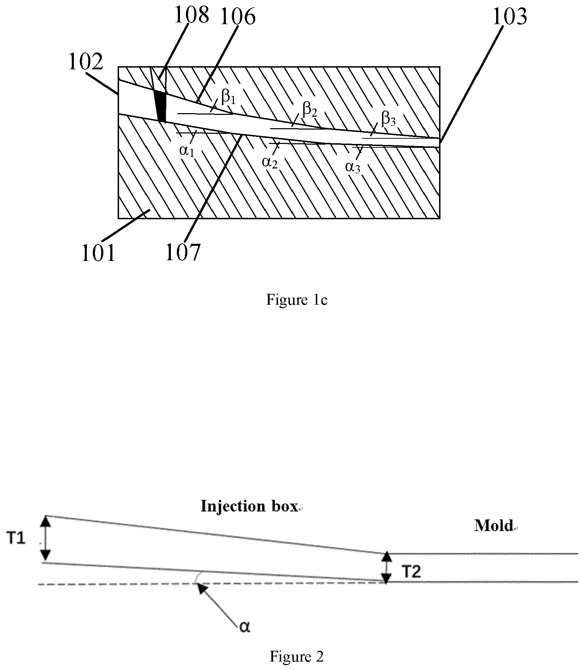

In the cavity of the injection box of the present application, the slope is set so that the lower wall section of the cavity is inclined up towards the inlet (for example, see Fig. 1 and Fig. 2).

Herein, the inclination can also be represented by the included angle α between the corresponding lower wall section of the cavity and the central axis of the injection box. Usually, the central axis of the injection box is set to be parallel to the horizontal plane, so the included angle α can also refer to the included angle between the lower wall section and the horizontal plane. Those skilled in the art should understand that, for example, referring to Fig. 1b, the included angle α refers to the included angle between the lower wall section of the cavity and the horizontal plane in the longitudinal section. See, for example, Fig. 1b and Fig. 1c. When describing the included angle α and taking the angle between the extension line of the corresponding lower wall section towards the outlet and the horizontal plane as the vertex, the angle formed between the straight line where the lower wall section is located and the horizontal plane (in the longitudinal section of the injection box) is usually is an acute angle. When the lower wall section of the cavity is above the central axis or the horizontal plane, the included angle α is a positive value, such as 1 °, 5 °, etc. When the lower wall section of the cavity is below the central axis or the horizontal plane, the angle α is negative. When the lower wall section of the cavity is on the central axis or the horizontal plane (i.e., parallel), the included angle α is 0. In the embodiments of the present application, the included angle α is advantageously a positive value. The specific description can be found below.

There are certain requirements on the setting of the included angle α. The included angle α must be set so that the height of the lower edge of the inlet of the cavity is not lower (preferably higher) than that of the upper and/or lower edge of the outlet, for example, not lower (preferably higher) than that of the lower edge of the outlet. When the height of the lower edge of the inlet of the cavity is lower than that of the upper and/or lower edge of the outlet, especially lower than the that of the lower edge of the outlet, the injected polyurethane material overflows from the inlet of the cavity. Therefore, the included angle α should advantageously be greater than or equal to 0°. When the included angle α takes a value less than 0° (i.e., a negative value), the polyurethane material may, for example, overflow from the inlet of the cavity. When the included angle α is too large, such as more than 5°, the included angle between the lower wall of the cavity and the central axis/horizontal plane will be too large, and the accumulation of polyurethane material occurs easily between the various slopes of the lower wall, or between the lower wall and the inlet of the mold, or between the lower wall and the transition section. For fast-reacting polyurethane materials, the materials may be gelated and even cured, if they cannot be removed as soon as possible, and it may cause peeling on the product or the mold may be even blocked, so that normal pultrusion production cannot be continued. In embodiments of the present application, the included angle α is in a range of 0-5°, such as 0.1°, 0.5°, 1°, 1.5°, 1.8°, 2°, 2.5°, 3°, 3.5°, 4°, 4.5° or 5°, preferably 1° or 1.8°.

The lower wall section of the inner wall of the cavity in the injection box of the present application may include one or more slopes, such as a first slope, a second slope, a third slope, and the like. The included angle α corresponding to the slopes can be expressed as included angle α1, α2, α3, and so on. It should be understood that the selection of each α is as described above. It should be understood that the expressions "first, second, third, etc." used herein are only used for distinction, and the indicated parts may be the same or different. When there is only one slope, the included angle α corresponds to the included angle α1.

As an example, the sequence of the signs "first" and "second" refers to the distribution from the inlet to the outlet of the cavity. For example, the slope close to the inlet is the first slope, then the second slope, the third slope, and so on. The later signs are closer to the outlet.

In a specific embodiment, each corresponding included angle α should meet the above requirements, when more than one slope is provided in the cavity.

In an embodiment, the lower wall section of the inner wall of the cavity includes a first slope, and the included angle α1 is in a range of 0-5°, such as 0.1°, 0.5°, 1°, 1.5°, 1.8°, 2°, 2.5°, 3°, 3.5°, 4°, 4.5° or 5°, preferably 1° or 1.8°. In another embodiment, the lower wall section of the inner wall of the cavity includes further a second slope, and the included angle α1 is in a range of 0-5°, such as 0.1°, 0.5°, 1°, 1.5°, 1.8°, 2°, 2.5°, 3°, 3.5°, 4°, 4.5° or 5°. In a preferred embodiment, (α1≥α2. In yet another embodiment, the lower wall section of the inner wall of the cavity includes further a third slope, and the included angle α3 is in a range of 0-5°, such as 0.1°, 0.5°, 1°, 1.5°, 1.8°, 2°, 2.5°, 3°, 3.5°, 4°, 4.5° or 5°. In a preferred embodiment, α1≥α2≥α3. If there are more slopes, such as the fourth and fifth slops, the setting thereof is preferably the same. Such setting makes the inclination of the cavity tend to be gentle from the inlet to the outlet, which is conducive to the advancement and pultrusion of the fiber material, avoids the backflow of the polyurethane material, and is also conducive to the infiltration of the polyurethane material.

In an embodiment, the multiple slopes are continuous, so that the lower wall of the cavity can form a certain arc, wherein the included angle α corresponding to each slope satisfies the requirements described above.

In an embodiment, the lower wall section of the inner wall of the cavity has a first slope. The first slope may be distributed from the inlet and may occupy, for example, a major portion of the cavity, such as, 80% or more, 85% or more, 90% or more, 95% or more. In an embodiment, the first slope may occupy the entire length of the cavity, such that there is only one slope in the entire cavity. In these cases, the cavity has a substantially flat lower wall. The included angle α (or α1) of the first slope is as described above.

In another embodiment, the lower wall section of the inner wall of the cavity may also have a second slope, which still causes the corresponding lower wall section of the cavity to be inclined up towards the inlet. The included angle α (or α2) of the second slope is as described above. The second slope is different from the first slope, and preferably, the lower wall section corresponding to the second slope is gentler than the lower wall section corresponding to the first slope, that is, α1≥α2. See, for example, the corresponding part in Fig. 1c. The second slope can be distributed from the outlet and can occupy a minor part of the cavity, such as, 40% or less, 35% or less, 30% or less, 25% or less, 20% or less, 15% or less, 10% or less, 5% or less.

In yet another embodiment, the lower wall section of the inner wall of the cavity may also have a third slope, which still causes the corresponding lower wall section of the cavity to be inclined up towards the inlet. The included angle α (or α3) of the third slope is as described above. The third slope is different from the second slope, and preferably, the lower wall section corresponding to the third slope is gentler than the lower wall section corresponding to the second slope, that is, α2≥α3.

In a preferred embodiment, the lower wall section close to the outlet of the injection box has a near-horizontal slope (such as the second slope, the third slope, etc.), and the corresponding included angle α is about 0°, for example, 0.1°, 0.2°, etc. Such setting is beneficial to increasing the stability of the fiber material infiltrated with the polyurethane material at the outlet, and to improving the flatness and uniformity of the obtained composites.

In the injection box of the present invention, the lower wall section and the corresponding upper wall section can form a cavity (as shown in longitudinal section), through which the fiber material passes. Similar to the included angle α between the lower wall section corresponding to the slope and the central axis of the injection box, the corresponding upper wall section and the central axis (horizontal plane) of the injection box can form an included angle β, so that the upper wall section has also one or more slopes. The angle β is defined in a similar way to the angle α. Similarly, the upper wall section corresponding to different slopes may also have different included angles β, such as β1, β2, β3, and so on.

In order to allow passage of the fiber material or the like, the included angle β should advantageously be larger than the corresponding included angle α. In an embodiment, the difference between the included angle β and the corresponding included angle α is in a range of 1-5°, such as 1°, 1.5°, 2°, 2.5°, 3°, 3.5°, 4°, 4.5° or 5° etc. The existence of the included angle β and the setting of the included angle β greater than the corresponding included angle α can make the sectional area of the cavity in the injection box decreasing in the direction from the inlet to the outlet. Therefore, in an embodiment of the present invention, the sectional area of the cavity in the injection box decreases in the direction from the inlet to the outlet. Such setting is conducive to balancing the injection pressure in the cavity of the injection box, so that the injection pressure is more uniform, and is conducive to fully and uniformly infiltrating the fiber material.

The setting of the included angle β can be independent with respect to the respective included angle α. For example, even if α2=α3, β2 may or may not be equal to β3. But, as a whole, the sectional area of the cavity in the injection box should decrease in the direction from the inlet to the outlet.

Therefore, in a specific embodiment, the sectional area (T1) of the inlet to the sectional area (T2) of the outlet of the cavity have a ratio (T1/T2) of 2:1-10:1, preferably 4:1-8:1, such as 2:1, 3:1, 4:1, 5:1, 6:1, 7:1, 8:1, 9:1, 10:1, etc. When T1/T2 is too small, it is not conducive to fully infiltrating the fiber material, which may result in insufficient amount of polyurethane in the obtained composites, resulting in the decrease in the performance of the composites. When T1/T2 is too large, the polyurethane material in the cavity cannot be easily taken away by the fiber material in time, and the residue of polyurethane material is prone to occur. The mold may be easily blocked due to the gelation and curing of the polyurethane material, which is not conducive to the continuity of the pultrusion process.

In the system for impregnating fibers of the present invention, there is no special requirement on the shape of the section of the cavity. For example, it can be in a shape of a circle, an ellipse, a rectangle, a rounded rectangle and the like. These shape may be symmetrical in section (see, for example, Fig. 1a). It can be chosen by those skilled in the art according to actual needs, such as the shape and properties of the polyurethane pultruded composites to be produced and the properties of the polyurethane materials used.

When describing the section of a cavity or part thereof (for example, inlet/outlet/transition section), see for example Fig. 1a, as opposed to the longitudinal section shown in Fig. 1b or 1c, the section refers to the section traversing the direction from the inlet to the outlet (and vice versa) .

The length of the injection box used in the system for impregnating fibers of the present invention may be 300 mm-1000 mm, preferably 400-650 mm, such as 600 mm. The length refers to the projected length of the cavity of the injection box on the horizontal axis. When the length is too small, it is not conducive to balancing the injection pressure in the cavity of the injection box, and it is also prone to poor infiltration of the fiber material. When the length is too large, there are higher requirements on the operating time of the resin itself.

In an embodiment, the injection box of the present invention may further comprise one or more injection orifices. Through these injection orifices, the polyurethane material is injected into the cavity, so that it fully impregnates the fiber material. The injection orifices can be communicated with the inner wall of the cavity for the injection of the polyurethane material. Alternatively, the polyurethane material can also be injected through the inlet of the cavity. In such a case, there is no need to provide an additional injection orifice.

In an embodiment, the injection box includes a plurality of detachable modules, wherein the cavities inside the plurality of modules are connected successively to form the cavity of the injection box. Such setting is conducive to cleaning inside the cavity. The plurality of modules can be integrally formed, or can be connected and fixed by positioning devices (for example, positioning pins, concave-convex tables, sliding grooves, etc.). They can also be locked by a quick locking device, so that the modules can be quickly separated after locking.

In an embodiment, the outlet of the injection box cavity of the present invention can be directly or indirectly connected with the inlet of the mold. The outlet of the injection box cavity can also be indirectly connected to the inlet of the mold in the following way, wherein a transition section can be provided between the inlet of the mold and the outlet of the injection box cavity and used to connect the inlet of the mold and the outlet of the injection box cavity (see, for example, Fig. 1b).

There is no special requirement on the shape of the section of the transition section. For example, it can be in a shape of a circle, an ellipse, a rectangle, a rounded rectangle, and the like. It can be chosen by those skilled in the art according to actual needs, such as the shape and properties of the polyurethane pultruded composites to be produced and the properties of the polyurethane materials used.

In a preferred embodiment, the sectional area of the transition section decreases in the direction from the inlet to the outlet.

In another preferred embodiment, the sectional area of the transition section outlet is greater than or equal to the sectional area of the inlet of the mold. In an embodiment, the ratio of the sectional areas of the inlet to the outlet of the injection box cavity is greater than or equal to the ratio of the inlet to the outlet of the transition section.

The length of the transition section can be set as desired. For example, the length of the transition section may be 0.1-100 mm, preferably 10-100 mm. The length refers to the projected length of the transition segment on the horizontal axis.

Setting of the transition section and parameters thereof helps to improve the infiltration of the fiber material with the polyurethane material, and at the same time increases the flatness of the surface of the fiber material entering the mold, and also helps to prevent the fiber material from breaking due to excessive tension.

In an embodiment, the whole or part of the injection box may be integrally formed with the mold. When a transition section exists, the whole or part of the injection box can be integrally formed with the transition section. The whole or part of the injection box can also be integrally formed with the transition section and the mold.

In another embodiment, the injection box and the mold, or the injection box, the mold and the transition section, can be connected and fixed by positioning devices (for example, positioning pins, concave-convex tables, sliding grooves, etc.). They can also be locked by a quick locking device, so that the parts can be quickly separated after locking.

In addition, it is well known to those skilled in the art that a sealing device can be provided between the separable structures (for example, between different modules of the injection box, between the injection box and the mold, between the injection box and the transition section, between the transition section and the mold) to ensure sealing.

Fig. 1 shows one embodiment of the system for impregnating fibers of the present invention.

Fig. 1a is a schematic view of the sectional structure thereof, showing the section of the injection box (101) and the inlet (102). Fig. 1b is a schematic view of the longitudinal sectional structure. The system for impregnating fibers includes an injection box (101), the size of which is related to the profile specification of the composites to be produced. The length of the injection box can be adjusted according to needs, for example, can be about 300-1100 mm; preferably about 400-750 mm. The injection box is provided with a cavity for the fiber material to pass through, the cavity having an inlet (102) and an outlet (103), and the lower inner wall (107) of the cavity having an upward slope with respect to the central axis of the injection box. The lower wall (107) forms an included angle α with the central axis/horizontal plane. The upper wall (106) forms an included angle β with the central axis/horizontal plane. The length of the cavity of the injection box can be 300 mm-1000 mm, preferably 400-650 mm (the length being the projected length of the distance between the inlet and the outlet on the horizontal plane). The sectional area of the cavity decreases in the direction from the inlet to the outlet, and the sectional area of the inlet (102) is larger than the sectional area of the outlet (103). The included angle α is in a range of 0-5°, such as 0.1°, 0.5°, 1°, 1.5°, 1.8°, 2°, 2.5°, 3°, 3.5°, 4°, 4.5° or 5°, preferably 1° or 1.8°. The system for impregnating fibers may further include a transition section (104). The outlet (103) of the injection box cavity is connected with the inlet of the transition section (104) to form a channel. The injection box is connected to the mold (105) through a transition section. The length of the transition section may be 0.1-100 mm, preferably 10-100 mm. The sectional area of the outlet of the transition section is greater than or equal to the sectional area of the inlet of the mold. The ratio of the sectional areas of the inlet to the outlet of the injection box cavity is greater than or equal to the ratio of the inlet to the outlet of the transition section. The injection box may also include one or more injection orifices (108).

Fig. 1c is a schematic longitudinal sectional view of another embodiment, showing the portion from the inlet (102) to the outlet (103) of the cavity. A first slope, a second slope and a third slope are sequentially arranged in the cavity from the inlet to the outlet, corresponding to the included angles α1, β1, α2, β2, and α3, β3, respectively. Preferably, α1>α2>α3. Preferably, the included angle α corresponding to the slope closest to the outlet (103) is relatively small, and may be about 0°, for example, 0.1°, 0.2°.

When α2=α3, the second slope and the third slope actually constitute one slope, which can also be called the second slope (corresponding to α2) in this case. The same is true for the first slope (α1). It should be understood by those skilled in the art that the included angles β can be set in a similar logic and are independently set with respect to the included angles α. For example, even if α2=α3, β2 may or may not be equal to β3.

Fig. 2 is a schematic view of a longitudinal sectional structure of one embodiment of the system for impregnating fibers of the present invention. The system for impregnating fibers includes an injection box, the cavity of the injection box being provided with a slope, and the lower wall of the cavity being inclined downward in the direction from the inlet to the outlet. The included angle α between the lower wall of the cavity and the central axis of the injection box is in a range of 0-5°, such as 0.1°, 0.5°, 1°, 1.5°, 1.8°, 2°, 2.5°, 3°, 3.5°, 4°, 4.5° or 5°, preferably 1° or 1.8°. The sectional area of the injection box cavity decreases in the direction from the inlet to the outlet. The ratio (T1/T2) of the sectional area (T1) of the inlet to the sectional area (T2) of the outlet (T1/T2) of the injection box cavity is 2:1-10:1, preferably 4:1-8:1, such as 2:1, 3:1, 4:1, 5:1, 6:1, 7:1, 8:1, 9:1, 10:1, etc. The outlet of the injection box is connected to the inlet of the mold. A transition section (not shown) may also be included between the injection box and the mold.

### Method for producing polyurethane pultruded composites

In another aspect, the present invention also relates to a pultrusion method for producing polyurethane pultruded composites, comprising the steps of:
providing the polyurethane material,
passing the fiber material through the cavity of the injection box,
injecting the polyurethane material into the cavity, thereby impregnating the fiber material,
curing the impregnated fiber material, thereby obtaining the polyurethane pultruded composites.

The polyurethane material of the present invention includes an isocyanate-reactive component and an isocyanate component. In an embodiment, the polyurethane material has a gel time of 5-49 minutes at 25°C. In another embodiment, the polyurethane material has a curing time of 15-90 seconds at 150-220°C. Having a suitable gel time and curing time is favorable for use in the polyurethane pultrusion process of the present invention, and obtaining composites with good performance. The term "gel time" in the present invention refers to the time from when the isocyanate component and the isocyanate-reactive component in the polyurethane material begin to mix until the viscosity reaches a certain value (for example, about 10000 mPa.s). The gel time here can be the time measured by using a gel tester, such as the "Hot Pot" Gel Timer from Gardco (GT-STHP-220).

The polyurethane material of the present invention has a relative short curing time and a relative long gel time, and can be better and more flexibly (for example, infiltrating and molding for a longer time) suitable for producing polyurethane pultruded composites, especially large-scale polyurethane pultruded composites. Specifically, at normal temperature, such as before entering the mold, the fiber material can be infiltrated and molded better for a longer time, while at high temperature, such as after entering the mold, it can be cured faster.

The isocyanate component of the present invention comprises at least one polyisocyanate. The polyisocyanate can be any aliphatic, cycloaliphatic or aromatic polyisocyanate known to be used in the preparation of polyurethanes. Examples include, but are not limited to: toluene diisocyanate (HTDI), diphenylmethane diisocyanate (MDI), polyphenyl polymethylene polyisocyanate (pMDI), 1,5-naphthalene diisocyanate (NDI), hexamethylene diisocyanate (HDI), methylcyclohexyl diisocyanate (TDI), 4,4'-dicyclohexylmethane diisocyanate, isophorone diisocyanate (IPDI), p-phenylene diisocyanate (PPDI), xylylene diisocyanate (XDI), tetramethylxylylene diisocyanate (TMXDI), polymers or combinations thereof. Isocyanates can include polyisocyanate dimers, trimers, tetramers, pentamers, or combinations thereof.

The isocyanate-reactive component may contain polyols known to be used for reaction with isocyanate components for preparing polyurethanes. Examples include, but are not limited to, polyether polyols, polyether carbonate polyols, polyester polyols, polycarbonate diols, polymer polyols, vegetable oil based polyols, or combinations thereof.

By way of example, polyether polyols can be prepared by known processes, e.g., by reacting olefin oxides with starters in the presence of a catalyst. Polyether carbonate polyols can also be used in the present invention, and can be prepared, for example, by adding carbon dioxide and alkylene oxides onto active hydrogen-containing starters using a double metal cyanide catalyst. Also by way of example, polyester polyols may be prepared by reacting dicarboxylic acids or dicarboxylic acid anhydrides with polyols.

Optionally, the polyurethane material of the present invention may also comprise one or more compounds having the structure of formula (I) 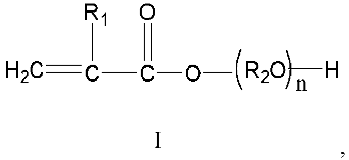 wherein R₁ is selected from hydrogen, methyl or ethyl; R₂ is selected from alkylene groups having 2-6 carbon atoms; n is an integer selected from 1-6.

Preferably, R₂ is selected from ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene, 2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, 2,2-propylene-bis(4-phenylene), 1,4-xylylene, 1,3-xylylene, 1,2-xylylene.

Preferably, the compounds of formula (I) is selected from hydroxyethyl methacrylate, hydroxypropyl methacrylate, hydroxybutyl methacrylate, hydroxyethyl acrylate, hydroxypropyl acrylate, hydroxybutyl acrylate or combinations thereof.

The compounds of formula (I) can be prepared by methods commonly used in the art, for example, by reacting (meth)acrylic anhydride or (meth)acrylic acid, (meth)acryloyl halide and HO-(R₂O)ₙ-H by esterification. Those skilled in the art are familiar with the preparation method, for example, see CN 104974502A.

Preferably, the polyurethane material may also contain a free radical reaction initiator. The free radical initiator used can be added to the polyol component or the isocyanate component or to both components. Specifically, it may include tert-butylperoxy isopropyl carbonate, tert-butylperoxy-3,5,5-trimethylhexanoate, methyl ethyl ketone peroxide, cumene hydroperoxide, and the like.

It should be understood that those skilled in the art can adjust the properties and amounts of the isocyanate component and the isocyanate-reactive component as required, such as the molecular weight, functionality, viscosity, hydroxyl value, end-capping, amount used, etc., so that the properties of the prepared polyurethanes can be adjusted, and can make them well matched with the fiber material, thereby obtaining polyurethane pultruded composites with good properties.

The reaction between the isocyanate component and the isocyanate-reactive component is namely the addition polymerization of isocyanate groups with hydroxyl groups. The isocyanate groups may include those in the (A) isocyanate component, or may also include those in the intermediates of the reaction of the (A) isocyanate component and the (B) isocyanate-reactive component. The hydroxyl groups may be those contained in the (B) isocyanate-reactive component, or may be those contained in the intermediates of the reaction of the (A) isocyanate component and the (B) isocyanate-reactive component.

The polyurethane material of the present invention may also contain additives, which are used to make the preparation process of polyurethanes and the production process of composites have desired properties, such as suitable reaction rate, good infiltration, fluidity, mold release and the like. Additives include, but are not limited to, release agents, initiators, catalysts, cross-linking agents, and the like.

Fiber material of the present invention may include, but are not limited to, glass fibers, carbon fibers, polyester fibers, natural fibers, aramid fibers, nylon fibers, basalt fibers, boron fibers, silicon carbide fibers, asbestos fibers, crystal whiskers, metal fibers or combinations thereof, preferably glass fibers, carbon fibers.

The form of the fiber material can be selected according to the requirements, so that the composites have suitable strength and good infiltration effect, examples of which include, but are not limited to: rovings, felts, fabrics, and the like.

In an embodiment, the fiber material may be partially or fully attached with a peel ply. There are no special requirements on the peel ply, which can be selected according to the needs, including but not limited to, nylon peel ply, polyester peel ply or any combination thereof. According to requirements, the peel ply can be attached to the side of the fiber material close to the upper wall of the cavity, or attached to the side of the fiber material close to the lower wall of the cavity, or attached to both sides of the fiber material.

According to the type and form of the fiber material (or the fiber material and the attached peel ply), an appropriate way can be selected to enter the cavity of the injection box. In an embodiment, the fiber material (or the fiber material and the attached peel ply) passes through a preforming frame into the injection box. Preferably, the fiber material (or the fiber material and the attached peel ply) is drawn to full smoothness by means of a drawing device. It is beneficial to improve the flatness, strength and other properties of composites.

The polyurethane material can be injected into the cavity through the injection port, thereby impregnating the fiber material. The components contained in the polyurethane material can be mixed in a certain mixing ratio by a mixing device and then injected into the cavity of the injection box. In an embodiment, the components contained in the polyurethane material are pumped continuously to a static mixing head according to a prescribed mixing ratio by an injection machine, and is injected into the cavity of the injection box after being mixed by the mixing head.

The injection pressure in the injection box can be controlled within a suitable range to ensure that the fiber material is fully impregnated and, at the same time, the overflowing of the polyurethane material from the inlet of the cavity is prevented. In an embodiment, the injection pressure in the injection box may be about 0.1-30 bar, preferably about 0.1-15 bar.

The impregnating time of the fiber material should be such that the fiber material is fully infiltrated with the polyurethane material to obtain good infiltration effect. If the impregnating time is too long, the infiltration effect will be poor. If the impregnating time is too long, for example, much longer than the gel time of the polyurethane material, it may cause the residue of polyurethane material in the cavity or even blockage.

The system of the present invention may further comprise heating means, cooling means and/or drying means to heat, cool and dry the material as required.

For example, the curing process of the impregnated fiber material can take place in a mold. The mold may be provided with heating means. The curing time and temperature should be adjusted according to the polyurethane material and fiber material used, so that the curing is sufficient while the production efficiency is improved. The impregnated fiber material can be continuously drawn through the mold at a certain speed by the drawing device, and the impregnated fiber material is cured during the process of passing through the mold. In an embodiment, the drawing device draws the impregnated fiber material at a speed of 0.1-2 m/min, preferably 0.4-1 m/min, for example 0.6 m/min. In an embodiment, the curing time is 15-90 s, preferably 20-80 s. In another embodiment, the curing temperature is 140-220°C, preferably 150-200°C, more preferably 160-170°C.

The composites can be cut by a cutting device according to the requirement on the length thereof. The composites can be wound into rolls for convenience of transportation, storage and use.

In the above production method, the humidity of the environment can be controlled. For example, the relative humidity of the environment around the fiber material can be controlled by a dehumidifier within 60%, preferably within 40%, to reduce the impact of moisture on the quality of composites.

The production method of the present invention may also optionally include a drying step. Polyurethane pultruded composites can be produced simply and efficiently, and blisters on the surface can be greatly reduced or even eliminated. The drying step can be realized by a drying device, so that the fiber material can be better infiltrated in a relative short time, especially the fiber material with a certain thickness. Polyurethane pultruded composites with excellent quality can be obtained with surface having a certain roughness and with surface having no blisters. Thus, waste can be avoided, resources can be saved, and production efficiency can be improved.

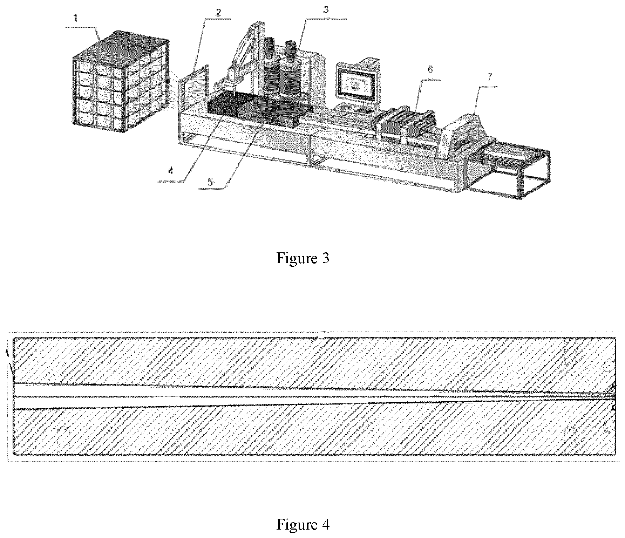

Fig. 3 shows a schematic view of the method for producing polyurethane pultruded composites incorporating the system for impregnating fibers of the present invention. After the fiber material is drawn out from the creel, it passes through the yarn guide plate, the injection box, and the mold successively and is drawn forward by the drawing device until the fiber material is all smooth. The polyurethane material is injected into the injection box by an injection machine, so that the fiber material is fully infiltrated. The composites formed after curing in the heated mold is continuously drawn out of the mold, and then cut by a cutting device according to requirements on the length.

### Polyurethane pultruded composites

The present invention also includes a polyurethane pultruded composite produced by the method of the present invention.

In one embodiment, the polyurethane pultruded composite includes cable trays, curtain wall frames for doors and windows, ladder frames, tent poles or pipes, anti-glare panels, floors, sucker rods, telegraph poles and cross arms, guardrails, grilles, profiles for buildings, container profiles and plates, bicycle racks, fishing rods, cable cores, insulator mandrels, radomes, single or sandwich continuous plates or plates for producing main beams of turbine blades, motor vehicle fenders, motor vehicle lamp shades, motor vehicle dashboards, motor vehicle hard roofs, motor vehicle doors, motor vehicle skeletons, motor vehicle body shells, motor vehicle radiator grilles, motor vehicle headlight reflectors, motor vehicle front end brackets, motor vehicle floors, motor vehicle seat frames, motor vehicle air deflectors, motor vehicle radiator masks or brackets, motor vehicle guard plates, motor vehicle cross beams, motor vehicle spoilers, motor vehicle sunshades, front and rear bumpers of motor vehicles, motor vehicle engine hoods, motor vehicle trim panels, rear liftgates of motor vehicle trunks, motor vehicle interior parts, engine valve covers, engine intake manifolds, fuel tank bottoms, motor vehicle air filter covers, motor vehicle wind scoopers, motor vehicle gear chamber covers, intake pipe guards, motor vehicle fan blades, motor vehicle fans, motor vehicle air guide rings, motor vehicle heater covers, motor vehicle water tank parts, motor vehicle water outlet shells, motor vehicle water turbines, engine sound insulation boards, motor vehicle door handles, water tanks, bathtubs, integral bathrooms, floors, waterproof pans, toilets, water purification tanks, electrical enclosures, insulators, printed circuit boards, electrical cable distribution grooves, telephone booth frames, anti-glare panels and bumping posts for highways, isolation piers for highways, cable brackets, optical cable transfer boxes, multimedia boxes, distribution boxes, cable branch boxes, traffic signal control boxes, water meter boxes, housings for metering instruments and internal parts thereof, housings for communication equipment and internal parts thereof, radomes, window frames for railway vehicles, components for train toilets.

### Beneficial effect

In the system for impregnating fibers of the present invention, the injection box adopts a special design, especially the design of the included angles, which can greatly reduce the overflow of the polyurethane material from the inlet of the injection box cavity. On the one hand, material waste is avoided, and on the other hand, the infiltration of the fibers in the resin can be improved. At the same time, undesired residue or curing of the polyurethane material in the injection box can be avoided with the design of the system for impregnating fibers of the present invention, so that the flow process and the processing can be realized, and the production efficiency can be greatly improved.

### Examples

The present invention is further described below in conjunction with specific examples. However, it should be understood that these examples are only intended to illustrate the present invention and not to limit the scope of the present invention.

In the following examples, the test methods without indicated specific conditions are usually carried out in accordance with conventional conditions or in accordance with the conditions suggested by the manufacturer. All percentages and parts are by weight, unless otherwise indicated.

### Materials and equipment

Isocyanate component: Isocyanate, Desmodur 44CP24 as the trade mark, purchased from Covestro Polymers (China) Co., Ltd.;
Isocyanate-reactive component: polyol combination, a combination of polyols having the trade mark of Baydur 18BD251 and of Baydur 18BD252 with the weight ratio of Baydur 18BD251 and Baydur 18BD252 of 100:4, all purchased from Covestro Polymers (China) Co., Ltd.;
Internal release agent: Baydur 18BD252 as the trade mark, purchased from Covestro Polymers (China) Co., Ltd.;
Glass fiber roving: PS 4100-2400Tex as the trade mark, purchased from Owens Corning Composite Materials (China) Co., Ltd.;
Carbon fiber roving: TRW 40/50L. A3750 tex as the trade mark, purchased from Mitsubishi Pyrofil TOW;
Pultrusion equipment: crawler pultrusion machine for composites, purchased from Nanjing Nuoertai Composite Materials Equipment Co., Ltd.;
Injection machine: Hydraulic Mini Link System, purchased from Magnum Venus Products.

### Production

The production process of fiber-reinforced polyurethane pultruded sheets is taken as an example for producing a flat plate with a thickness of 5 mm and a width of 105 mm.

As shown in Fig. 3, a certain amount of fiber material 1 is firstly drawn from the creel, passes through the yarn guide plate 2, the injection box 4, and the mold 5, and is then drawn forward by the drawing device 6 until the fiber material is all smooth. The heating device of mold 5 is turned on, and the mold temperature is controlled from the inlet to the outlet as follows: 80°C, 170°C, 160°C. After the temperature is stable, the injection machine is turned on. The isocyanate component and the polyol combination (100 parts of Baydur 18BD251 and 4 parts of Baydur 18BD252) are continuously pumped to the static mixing head according to the specified mixing ratio. After being mixed by the mixing head, it is injected into the injection box 4 through the injection orifice. The polyurethane material is controlled not to overflow from the inlet, while the fiber material 1 can be fully impregnated. The injection pressure in the injection box 4 is controlled at 0.1-15 bar. The fiber material 1 fully impregnated in the injection box 4 is continuously drawn through the mold 5 by the drawing device 6 at a speed of 0.6 m/min, and then cut off after exiting the mold, so that a composite plate of a certain length (specification: thickness of 5 mm, width of 105 mm) is obtained. The surface thereof is smooth without dry yarn and without blister. Then, it is wound into rolls for later use.

### Comparative Example 1

The comparative example 1 was obtained with reference to the production method described above. The fiber material 1 was glass fiber yarn, and the injection box 4 was a conventional injection box as shown in Fig. 4. The cavity of the injection box had a symmetrical taper with respect to the central axis of the pultrusion direction, i.e. there were taper angles both upward and downward.

### Comparative Example 2

The comparative example 2 was obtained with reference to the production method described above. The fiber material 1 was carbon fiber yarn, and the injection box 4 was a conventional injection box as shown in Fig. 4.

### Example 1

The example 1 was obtained with reference to the production method described above. The fiber material 1 was glass fiber yarn, and the injection box 4 was the injection box of the present invention shown in Fig. 1. The length of the injection box was 600 mm, the inclination degree (α) was 1.8°, the number of slop(s) was 1, T1/T2=5/1, and there was no transition section.

### Example 2

The example 2 was obtained with reference to the production method described above. The fiber material 1 was carbon fiber yarn, and the setting of the injection box 4 referred to that in Example 1.

During the production process of Comparative Examples 1-2, the polyurethane material would overflow from the inlet of the injection box cavity, causing the polyurethane material to be wasted in the continuous pultrusion. The infiltration effect of the polyurethane material on the fiber material was medium, and a polyurethane composite plate with the medium infiltration was obtained.

During the production process of Example 1-2, the polyurethane material did not or almost did not overflow from the inlet of the injection box cavity, thereby realizing the continuous pultrusion. Moreover, there was no residue of polyurethane material in the cavity of the injection box. The infiltration effect on the fiber material was good. A polyurethane composite plate with good infiltration was obtained.

## Claims

1. A system for impregnating fibers for a polyurethane pultrusion process, the system for impregnating fibers comprising an injection box, the injection box having a cavity for the fiber material to pass through, and the cavity having an inlet and an outlet, **characterized in that**,
the lower wall section of the inner wall of the cavity includes one or more slopes, the lower edge of the inlet of the cavity is not lower than the lower edge of the outlet of the cavity, and the slope closest to the inlet makes the inlet of the cavity sloping down towards the outlet.

2. The system of claim 1, **characterized in that**,
the lower wall section of the inner wall of the cavity has a slope, wherein the corresponding lower wall section and the central axis of the injection box have an included angle α, and the range of the included angle α is 0-5°.

3. The system of claim 1 or 2, **characterized in that**,
the lower wall section of the inner wall of the cavity has a first slope, wherein the corresponding lower wall section and the central axis of the injection box have an included angle α1, and the range of the included angle α1 is 0-5° ,
the lower wall section of the inner wall of the cavity has a second slope, wherein the corresponding lower wall section and the central axis of the injection box have an included angle α2, and
α1≥α2, α1 is closer to the inlet than α2 ,
wherein the lower wall section of the inner wall of the cavity preferably includes further a third slope, wherein the corresponding lower wall section and the central axis of the injection box have an included angle α3, wherein
α1≥α2≥α3, α2 is closer to the inlet than α3.

4. The system of any one of claims 1-3, **characterized in that**,
the sectional area of the cavity decreases in the direction from the inlet to the outlet.

5. The system of any one of claims 1-4, **characterized in that**,
the sectional area (T1) of the inlet to the sectional area (T2) of the outlet of the cavity have a ratio (T1/T2) of 2:1-10:1, preferably 4:1-8:1.

6. The system of any one of claims 1-5, **characterized in that**,
the length between the inlet and the outlet of the cavity is 300-1000 mm, preferably 400-650 mm, wherein the length is t.

7. The system of any one of claims 1-6, **characterized in that**,
the system includes further a mold, the outlet of the cavity being connected to the mold;
a transition section is optionally provided between the outlet of the cavity and the mold, the cavity and the mold being connected by the transition section;
preferably, the sectional area of the transition section decreases in the direction from the inlet to the outlet, and/or
the sectional area of the outlet of the transition section is greater than or equal to that of the inlet of the mold, and/or
the length of the transition section is 0.1-100 mm, preferably 10-100 mm.

8. The system of any one of claims 1-7, **characterized in that**,
the injection box includes further one or more injection orifices.

9. The system of any one of claims 1-8, **characterized in that**,
the fiber material includes glass fibers, carbon fibers, polyester fibers, natural fibers, aramid fibers, nylon fibers, basalt fibers, boron fibers, silicon carbide fibers, asbestos fibers, crystal whiskers, metal fibers or combinations thereof, preferably glass fibers, carbon fibers;
the fiber material is optionally attached with a peel ply.

10. The system of any one of claims 1-9, **characterized in that**,
the system includes further heating means, cooling means and/or drying means.

11. A pultrusion method for producing polyurethane composites, said method using the system of any one of claims 1-10, and comprising the steps of:
providing the polyurethane material,
passing the fiber material through the cavity of the injection box,
injecting the polyurethane material into the cavity, thereby impregnating the fiber material,
curing the impregnated fiber material, thereby obtaining the polyurethane composites.

12. The method of claim 11, **characterized in that**,
the polyurethane material includes an isocyanate-reactive component and an isocyanate component, wherein,
the polyurethane material has a gel time of 5-49 minutes at 25°C; and/or
the polyurethane material has a curing time of 15-90 seconds at 150-220°C.

13. The method of claim 11 or 12, **characterized in that**,
the polyurethane material is introduced from the inlet of the cavity or through an additional injection orifice.

14. The method of any one of claims 11-13, **characterized in that**,
the curing takes place in the mold, the mold optionally provided with heating means;
the curing time is 15-90 s, preferably 20-80 s, and/or
the curing temperature is 140-220°C, preferably 150-200°C, more preferably 160-170°C.

15. A polyurethane composite produced by the method of any one of claims 11-14, wherein the polyurethane product preferably includes cable trays, curtain wall frames for doors and windows, ladder frames, tent poles or pipes, anti-glare panels, floors, sucker rods, telegraph poles and cross arms, guardrails, grilles, profiles for buildings, container profiles and plates, bicycle racks, fishing rods, cable cores, insulator mandrels, radomes, single or sandwich continuous plates or plates for producing main beams of turbine blades, motor vehicle fenders, motor vehicle lamp shades, motor vehicle dashboards, motor vehicle hard roofs, motor vehicle doors, motor vehicle skeletons, motor vehicle body shells, motor vehicle radiator grilles, motor vehicle headlight reflectors, motor vehicle front end brackets, motor vehicle floors, motor vehicle seat frames, motor vehicle air deflectors, motor vehicle radiator masks or brackets, motor vehicle guard plates, motor vehicle cross beams, motor vehicle spoilers, motor vehicle sunshades, front and rear bumpers of motor vehicles, motor vehicle engine hoods, motor vehicle trim panels, rear liftgates of motor vehicle trunks, motor vehicle interior parts, engine valve covers, engine intake manifolds, fuel tank bottoms, motor vehicle air filter covers, motor vehicle wind scoopers, motor vehicle gear chamber covers, intake pipe guards, motor vehicle fan blades, motor vehicle fans, motor vehicle air guide rings, motor vehicle heater covers, motor vehicle water tank parts, motor vehicle water outlet shells, motor vehicle water turbines, engine sound insulation boards, motor vehicle door handles, water tanks, bathtubs, integral bathrooms, floors, waterproof pans, toilets, water purification tanks, electrical enclosures, insulators, printed circuit boards, electrical cable distribution grooves, telephone booth frames, anti-glare panels and bumping posts for highways, isolation piers for highways, cable brackets, optical cable transfer boxes, multimedia boxes, distribution boxes, cable branch boxes, traffic signal control boxes, water meter boxes, housings for metering instruments and internal parts thereof, housings for communication equipment and internal parts thereof, radomes, window frames for railway vehicles, components for train toilets.
